# EUROPÄISCHE PATENTSCHRIFT

(11) **EP 1 761 405 B1**
(45) Veröffentlichungstag und Bekanntmachung des Hinweises auf die Patenterteilung: **18.02.2009**
(21) Anmeldenummer: 05768558.8
(22) Anmeldetag: 24.06.2005
(51) Int. Cl.: B60H 1/00

(54) **KLIMAANLAGE, INSBESONDERE KRAFTFAHRZEUG-KLIMAANLAGE**
AIR-CONDITIONING SYSTEM, ESPECIALLY AUTOMOTIVE AIR-CONDITIONING SYSTEM
CLIMATISEUR, EN PARTICULIER CLIMATISEUR DE VEHICULE AUTOMOBILE

(30) Priorität: 24.06.2004 DE 102004030693
(43) Veröffentlichungstag der Anmeldung: 14.03.2007
(73) Patentinhaber: Behr GmbH & Co. KG, 70469 Stuttgart (DE)
(72) Erfinder: KOUKOURAVAS, Evripidis, 72654 Neckartenzlingen (DE); DIEKSANDER, Wolfgang, 71711 Steinheim/Murr (DE); HÖRIG, Harald, 76476 Bischweier (DE); KOMAREK, Eugen, 68126 Heidelberg (DE); SCHULTEN, Otto, 75428 Illingen (DE); SCHWEIZER, Gebhard, 71229 Leonberg (DE)
(86) Internationale Anmeldenummer: PCT/EP2005/006852
(87) Internationale Veröffentlichungsnummer: WO 2006/000434

(56) Entgegenhaltungen:
- EP-A- 1 604 849
- FR-A- 2 737 445
- US-A- 4 537 245
- US-A- 5 101 883
- US-A- 5 209 397
- US-A1- 2004 016 536

## Beschreibung

Die Erfindung betrifft eine Klimaanlage, insbesondere Kraftfahrzeug-Klimaanlage, gemäß dem Oberbegriff des Anspruches 1.

Herkömmliche Klimaanlagen für Kraftfahrzeuge weisen je nach Komfortanforderungen eine unterschiedliche Anzahl von im Fahrzeuginnenraum möglichen Klimatisierungszonen auf. Je nachdem wie viele solcher Zonen unterschiedlich konditioniert werden können, unterscheidet man im Wesentlichen ein-, zwei-, drei,- oder vierzonige Klimaanlagen. Die Einteilung der Zonen des Fahrzeuginnenraums erfolgt in jeweils vordere Zonen und hintere Zonen, sowie fahrer- und beifahrerseitige Zonen, wodurch sich im Wesentlichen vier Zonen ergeben. Die Zonigkeit der Klimaanlage ergibt sich aus der Anzahl der Klimazonen die mit unterschiedlich konditionierter Luft der Klimaanlage versorgt werden können. In der Regel ist für jede Änderung der Zonenanzahl eine neue Auslegung der Kilmanalage, insbesondere des Luftführungsgehäuses mit den darin angeordneten Luftführungskanälen und den diese in manchen Bereichen unterteilenden Trennwänden. So ergibt sich, dass für jede Variante, insbesondere auch in Hinblick auf die Varianten einzonige Klimaanlage, zweizonige Klimaanlage und vierzonige Klimaanlage, die gesamte Klimaanlage neu konstruiert werden muss und für jede Variante spezielle Werkzeuge erforderlich sind.

Die EP 1 288 031 A1 offenbart eine modular aufgebaute Kraftfahrzeug-Klimaanlage mit Mitteln zur Verteilung eines Haupt-Luftstroms und einem Heizkörper zum Erwärmen eines zweiten Luftstroms. Die Klimaanlage ist in einem Gehäuse angeordnet. Den modularen Aufbau der Klimaanlage gibt es in wenigstens drei Versionen, nämlich für eine ein-, eine zwei- und eine dreizonige Klimaanlage, die für die Erzeugung eines Luftstroms mit vorgegebener Temperatur in den entsprechenden Zonen geeignet ist. Hierbei ist der äußere Aufbau der verschiedenen Versionen der Klimaanlage identisch, unabhängig von der Zonenanzahl. Der modulare Aufbau wird im Wesentlichen durch eine Vielzahl unterschiedlicher Einlegeteile gebildet, welche das Gehäuse entsprechend der gewünschten Zonenanzahl unterteilen. Hierbei werden, jeweils der gewünschten Zonenanzahl entsprechend, Einlegeteile in das Luftführungsgehäuse eingebaut. Eine derartigere Klimaanlage lässt noch Wünsche offen.

Aus dem Dokument US 6 772 833 ist eine Fahrzeugklimaanlage bekannt, die über einen modularen Einsatz ("modular insert ") in ihrer "Zonigkeit" veränderbar ist. Unter anderem gelingt dies auch dadurch, dass zwei Mischklappen unabhängig voneinander betätigt oder aber auch durch eine Kopplung ("link") miteinander verbunden werden können, so dass im ersten Fall die Temperatur einer ersten und zweiten Zone unabhängig voneinander einstellbar ist und im zweiten Fall durch die Kopplung zwei Zonen zu einer einzeigen Temperaturzone zusammen gefasst werden können.

Aus dem Dokument US 4,537,245 eine Fahrzeugklimaanlage bekannt bei der Temperatureinsteller für die vier Zonen durch einen einzigen Temperatureinsteller zu ersetzen sind.

Das Dokument US 5,101.883 offenbart eine Klimaanlage, die als Einzonen- oder Zweizonensystem herstellbar ist, wobei entweder eine einzige Temperaturmischklappe oder ein Paar von Temperaturmischklappen vorgesehen ist.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Gemäß dem Stand der Technik sind eine Vielzahl von unterschiedlichen Einsätzen bekannt, wobei in der Regel ausgehend von einer wenigerzonigen Klimaanlage durch das Einfügen von zusätzlichen Trennwänden eine mehrzonige Klimaanlage gebildet wird. Dabei werden entsprechend der gewünschten Zonenanzahl Steuerelemente vorgesehen. Im Gegensatz hierzu wird ausgehend von einer mehrzonigen Klimaanlage durch Vereinfachung der Steuerung, bevorzugt durch das Vorsehen miteinander direkt oder indirekt koppelbarer Klappen, eine wenigerzonige Klimaanlage gebildet, wobei die Zonenanzahl nach dem Einbau üblicherweise nicht geändert wird. Das Koppeln der Klappen erfolgt vorzugsweise von außerhalb des Luftführungsgehäuses, so dass das Innere des Luftführungsgehäuses, insbesondere das Einlegeteil, bei unterschiedlichen Varianten zumindest im Wesentlichen gleich ausgebildet ist. Somit ergibt sich eine mehrzonige Basisvariante und eine zumindest im Inneren im Wesentlichen gleich ausgebildete wenigerzonige Variante hierzu.

Vorzugsweise sind die Klappen am Einlegeteil angebracht, so dass eine einfache Vormontage möglich ist. Die Koppelung der Klappen erfolgt bevorzugt mechanisch, insbesondere durch eine starre Verbindung der beiden Klappen, jedoch kann auch ein Getriebe vorgesehen sein.

Bevorzugt ist das Luftführungsgehäuse für Klimaanlagen mit unterschiedlicher Zonenanzahl zumindest im Einbaubereich des Einlegeteils gleich ausgebildet. Dadurch lassen sich die Stückzahlen erhöhen, so dass die Herstellungskosten gesenkt werden können.

Im Luftführungsgehäuse ist vorzugsweise mindestens ein Einlegeteil angeordnet, welches in einem Bereich desselben mindestens eine Trennwand aufweist, welche zwei Kanäle, insbesondere zwei Warmluftkanäle, die unter schiedlichen Klimazonen zugeordnet sind, voneinander trennt. Die Kanäle können der Innenraumbelüftung und/oder dem Fußraum zugeordnet sein.

Bevorzugt ist ein Heizer und/oder Zuheizer in einem Einlegeteil angeordnet, das seinerseits im Luftführungsgehäuse angeordnet ist. Dies ermöglicht eine bedarfsgerechte Ausbildung der Kanäle. Ferner ermöglicht die Anordnung im Einlegeteil die breitere Verwendung des Luftführungsgehäuses, da spezielle Ausgestaltungen, beispielsweise für ein- und zweizonige und drei- und vier zonige Klimaanlagen am Einlegeteil vorgenommen werden können, wie beispielsweise das Vorsehen von Abdeckungen im ein- und zweizonigen Anwendungsfall nicht benötigter Kanäle.

Bevorzugt ist das Einlegeteil für eine ein- und zweizonige und/oder eine drei- und vierzonige Klimaanlage in übereinstimmender Weise ausgebildet. Hierbei gibt es konstruktionsbedingt in der Regel Unterschiede zwischen den Einlegeteilen für ein- und zweizonige Klimaanlagen und den Einlegeteilen für drei- und vierzonige Klimaanlagen, so dass - abgesehen von einer Verbindung der regelbaren Elemente des Einlegeteils - die ein- und die zweizonigen bzw. die drei- und die vierzonigen Klimaanlagen identisch aufgebaut sind.

Das Luftführungsgehäuse für eine ein- und zweizonige und/oder eine drei- und vierzonige Klimaanlage ist bevorzugt gleich ausgebildet. Bei Unterschieden zwischen dem Aufbau ein- und zweizoniger Klimaanlagen und dem Aufbau drei- und vierzoniger Klimaanlagen können diese durch die Verwendung unterschiedlicher Einlegeteile behoben werden, so dass nur ein Luftführungsgehäuse erforderlich und somit ein optimierter modularer Aufbau der Klimaanlage möglich ist.

Das Einlegeteil umfasst bevorzugt auch eine Luftverteilervorrichtung zur Luftverteilung zu den Fußräumen. Dabei kann diese an das Einlegeteil angespritzt sein.

Alternativ können getrennt ausgebildete Einlegeteile für die Luftverteilung zu den Fußräumen und Einlegeteile für die Lufttemperierung vorgesehen sein. Dies ist insbesondere aus herstellungstechnischen Gründen der Fall bei vier und mehrzonigen Klimaanlagen.

Im Folgenden wird die Erfindung anhand zweier Ausführungsbeispiele mit Varianten unter Bezugnahme auf die Zeichnung im Einzelnen erläutert. In der Zeichnung zeigen:
- Fig. 1: eine schematische Darstellung der zentral angeordneten Warmluftkanäle einer vierzonigen Kraftfahrzeug-Klimaanlage gemäß dem ersten Ausführungsbeispiel (Basisversion),
- Fig. 2: eine Fig. 1 entsprechende schematische Darstellung der zentral angeordneten Warmluftkanäle der dreizonigen Variante der Kraftfahrzeug-Klimaanlage gemäß dem ersten Ausführungsbeispiel mit schematisch dargestellter Klappenkoppelung,
- Fig. 3: einen Schnitt durch eine mehrzonige Klimaanlage gemäß dem ersten Ausführungsbeispiel,

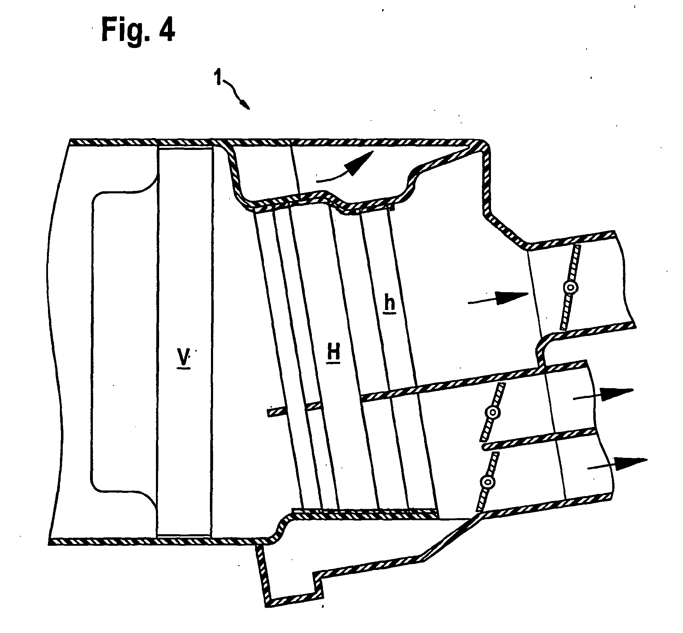

- Fig. 4: einen Schnitt senkrecht zum in Fig.3 dargestellten Schnitt durch eine mehrzonige Klimaanlage gemäß dem ersten Ausführungsbeispiel,
- Fig. 5: eine erste perspektivische Darstellung des Einlegeteils gemäß dem ersten Ausführungsbeispiel,
- Fig. 6: eine zweite perspektivische Darstellung des Einlegeteils gemäß dem ersten Ausführungsbeispiel,
- Fig. 7: eine perspektivische Ansicht eines Einlegeteils für die Fußräume gemäß dem ersten Ausführungsbeispiel,
- Fig. 8: eine andere perspektivische Ansicht des Einlegeteils von Fig. 7,
- Fig.9: eine perspektivische Ansicht eines Einlegeteils für die Fußräume gemäß einer Variante des ersten Ausführungsbeispiels,
- Fig. 10: eine andere perspektivische Ansicht des Einlegeteils von Fig. 9,
- Fig. 11 1: eine Seitenansicht des Einlegeteils von Fig. 9,
- Fig. 12: eine schematische Darstellung der zentral angeordneten Warmluftkanäle einer zwei Kraftfahrzeug-Klimaanlage gemäß dem zweiten Ausführungsbeispiel (Basisversion),
- Fig. 13: eine Fig. 12 entsprechende schematische Darstellung der zentral angeordneten Warmluftkanäle der einzonigen Variante der Kraftfahrzeug-Klimaanlage gemäß dem zweiten Ausführungsbeispiel mit schematisch dargestellter Klappenkoppelung,
- Fig. 14: einen Schnitt durch eine mehrzonige Klimaanlage gemäß dem zweiten Ausführungsbeispiel,
- Fig. 15: einen Schnitt senkrecht zum in Fig.14 dargestellten Schnitt durch eine mehrzonige Klimaanlage gemäß dem zweiten Ausführungsbeispiel,
- Fig. 16: eine erste perspektivische Darstellung des Einlegeteils gemäß dem zweiten Ausführungsbeispiel,
- Fig. 17: eine zweite perspektivische Darstellung des Einlegeteils von Fig. 16,
- Fig. 18: ein Seitenansicht des Einlegeteils von Fig. 16,
- Fig. 19: eine perspektivische Darstellung eines Einlegeteils mit angespritztem Einlegeteil für die Fußräume gemäß einer Variante des zweiten Ausführungsbeispiels,
- Fig. 20: eine andere perspektivische Darstellung des Einlegeteils von Fig. 19, und
- Fig. 21: eine Seitenansicht des Einlegeteils von Fig. 19.

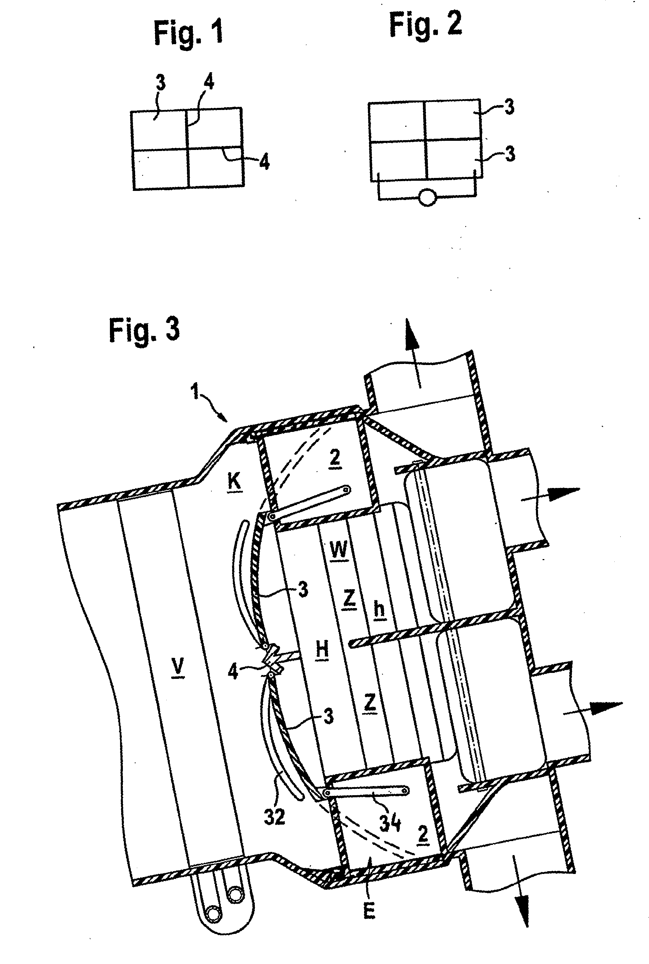

Eine Kraftfahrzeug-Klimaanlage weist ein Luftführungsgehäuse 1, wie in Fig. 3 dargestellt, mit in demselben angeordnetem Heizer H, Zuheizer h und Verdampfer V auf, wobei das Luftführungsgehäuse 1 aus fertigungs- und montagetechnischen Gründen mehrteilig als Kunststoff-Spritzgussteil ausgebildet ist. Zu klimatisierende Luft wird über ein nicht dargestelltes Gebläse durch die Klimaanlage gefördert und gegebenenfalls über einen Luftfilter geleitet. In dem Luftführungsgehäuse 1 sind eine Mehrzahl von Luftkanälen 2 und Klappen 3 zur Steuerung der Luftströmung mit Hilfe von Einlegeteilen E ausgebildet bzw. angeordnet.

Gemäß dem in den Figuren 1 und 2 dargestellten ersten Ausführungsbeispiel mit Variante ist als Basisversion eine vierzonige Klimaanlage vorgesehen, welche jeweils den vier Klimazonen zugeordnete, durch zwei sich kreuzende Trennwände 4, die Teil des Einlegeteils E sind, voneinander getrennte, zentral angeordnete Warmluftkanäle W und seitlich hiervon angeordnete Kaltluftkanäle K (nicht in den Figuren 1 und 2 dargestellt) aufweist. Jeder der Klimazonen ist zur Regelung der Lufttemperatur eine Klappe 3 zugeordnet, die direkt über eine Steuerungsvorrichtung ansteuerbar ist, von einem Stellmotor angetrieben wird, und die unabhängig von den anderen Klappen 3 bewegt werden kann.

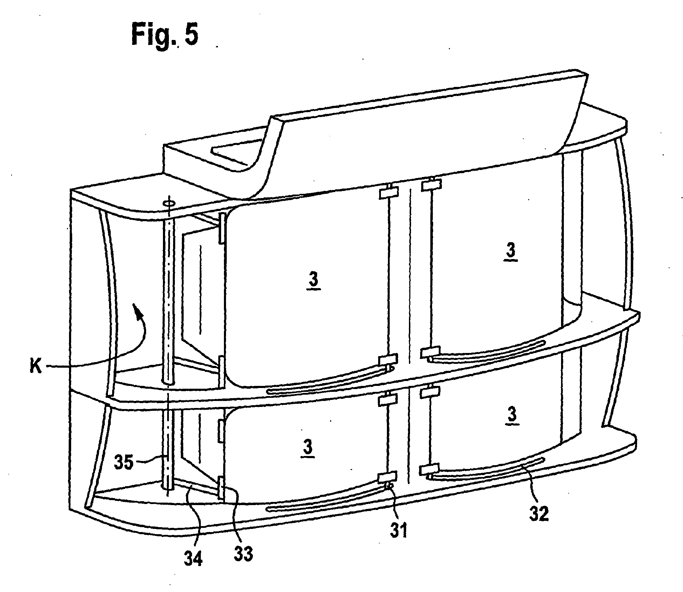

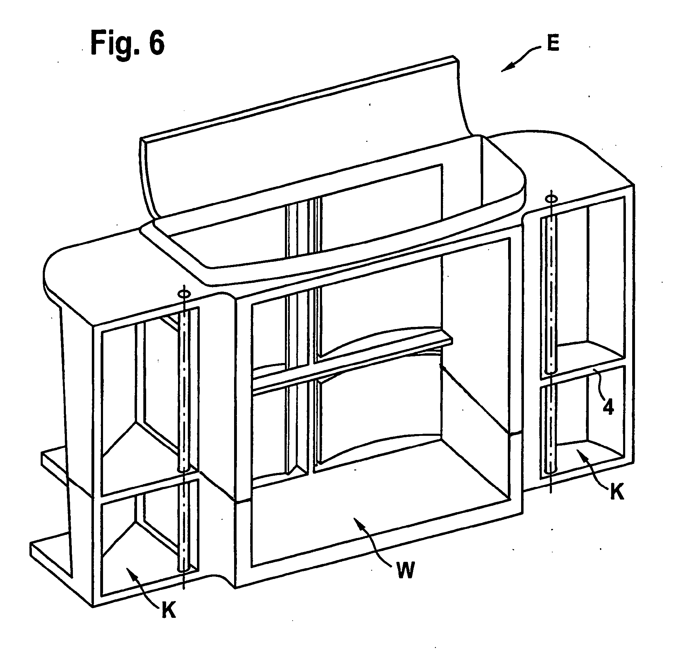

Die Klappen 3 sind schwenk- und verschiebbar am Einlegeteil E angebracht. Sie weisen auf einer Seite Zapfen 31 auf, welche in Langlöchern 32 geführt sind (siehe Fig. 5), und sind auf ihrer anderen Seite mit einem Scharnier 33 gelagert, welches an einem Ende eines Arms 34 angeordnet ist, der sich von einer Welle 35 aus erstreckt (siehe Fig. 6), so dass die Klappen 3 die erforderliche Schwenk-Verschiebe-Bewegung durchführen können. Die Anordnung der Klappen 3 ist spiegelbildlich bezüglich der Mittelebene, welche parallel zu den Wellen 35 verläuft.

Vorliegend sind die dem Frontbereich des Kraftfahrzeugs zugeordneten Klappen 3 doppelt so hoch wie die den unterhalb hiervon und dem Fondbereich zugeordneten Klappen 3 ausgebildet, jedoch sind auch einander entsprechende Klappengrößen möglich. Die Klappen 3 sind über die Wellen 35, welche bis über das Luftführungsgehäuse 1 hinaus ragen, mit je einem Stellmotor verbunden. Hierbei können auch schaltbare Getriebe vorgesehen sein, so dass ein Stellmotor verschiedene Klappen 3 unabhängig voneinander betätigen kann.

Das Einlegeteil E ist im Luftführungsgehäuse 1 angeordnet und wird bei der Montage in dasselbe eingesetzt. Hierbei ist das Einlegeteil E derart im Luftführungsgehäuse 1 aufgenommen, dass der Strömungsverlauf der Luft geringstmöglich negativ beeinflusst wird, wofür das Luftführungsgehäuse 1 entsprechend erweitert ist, so dass möglichst keine Kanten im Bereich der Übergänge in den Luftströmungsweg hineinragen. Das Einlegeteil E nimmt zudem den Heizer H und den Zuheizer h auf (vgl. Fig. 3). Es ist aus fertigungstechnischen Gründen mehrteilig ausgebildet, wie insbesondere Fig. 6 entnommen werden kann, wobei gemäß dem vorliegenden Ausführungsbeispiel eine Teilung in horizontaler Richtung in Höhe der horizontal verlaufenden Trennwand 4 vorgesehen ist und die beiden Teile mittels Clipsverbindungen miteinander verbunden sind, so dass bei der Montage der Heizer H und der Zuheizer h im Einlegeteil E positioniert werden. Für die optimale Positionierung von Heizer H und Zuheizer h weist das Einlegeteil E jeweils einen mit Hilfe von in Einführrichtung verlaufenden Rippen entsprechend ausgebildeten Einführschacht auf (vgl. Fig. 6) sowie gegebenenfalls weiterer Positionierungselemente, wie beispielsweise weitere als Stopp dienende Rippen, so dass diese Elemente im Einlegeteil E beim Einführen automatisch richtig positioniert und wackelsicher gehalten werden.

Um bei der Fertigung aus einer vierzonigen Klimaanlage, eine dreizonige Klimaanlage mit vereinfachter Steuerung zu machen, ist eine in Fig. 2 schematisch dargestellte mechanische Klappenkoppelung 5 vorgesehen, welche die den Zonen drei und vier zugeordneten Klappen 3 verbindet, so dass sie über eine gemeinsame Steuervorrichtung steuerbar sind. Somit sind anstelle von vier Steuervorrichtungen nur drei Steuervorrichtungen erforderlich. Hierbei werden vorliegend die beiden Klappen 3, die dem Fondbereich zugeordnet sind, gekoppelt. Dabei erfolgt gemäß der vorliegenden Variante des ersten Ausführungsbeispiels die Koppelung außerhalb des Luftführungsgehäuses 1, so dass zumindest der Innenraum des Einlegeteils E bei der Basisvariante (Ausführungsbeispiel 1) und der Variante hierzu identisch ausgebildet sind. Unterschiede zwischen Basisvariante und Variante ergeben sich erst außerhalb des Luftführungsgehäuses 1 auf Grund der hier vorgesehenen Verbindung mit den Stellmotoren, wobei im Falle der Basisvariante vier Stellmotoren und im Falle der Variante lediglich drei Stellmotoren vorgesehen sind, da im Falle der Variante zwei Klappen 3 mit Hilfe eines außerhalb des Luftführungsgehäuses angeordneten Getriebes (nicht dargestellt) gekoppelt sind, so dass die gekoppelten Klappen 3 synchron betätigbar sind.

Prinzipiell kann aus der vierzonigen Klimaanlage durch entsprechende Koppelungen auch eine zwei- oder gar einzonige Klimaanlage mit entsprechend vereinfachter Steuerung gemacht werden, so dass sehr große Stückzahlen zumindest für Teile des Luftführungsgehäuses und das Einlegeteil möglich sind, wodurch die Herstellungskosten gesenkt werden können. So lassen sich beispielsweise der Front- und der Fondbereich oder die rechte Seite und die linke Seite jeweils untereinander koppeln.

Auf Grund von in der Regel vorhandenen grundsätzlichen Unterschieden bei der Luftführung, wie dass bei ein- und zweizonigen Klimaanlagen üblicherweise kein B-Säulen-Abgang vorgesehen ist, kommen in der Regel Module, insbesondere auch in Hinblick auf das Luftführungsgehäuse, für ein- und zweizonige Klimaanlagen sowie abweichend hiervon ausgestaltete Module für drei- und vierzonige Klimaanlagen in Frage, wobei jeweils die zwei- bzw. vierzonige Klimaanlage die Basisvariante bildet. Die ein- bzw. dreizonige Klimaanlage werden hieraus als Varianten durch Koppeln der Klappen und gegebenenfalls anderen leichten konstruktiven Veränderungen, wie beispielsweise Verschließen von Öffnungen, z.B. einem B-Säulen-Abgang des Luftführungsgehäuses, gebildet.

Für die Fußräume der einzelnen Zonen ist gemäß dem ersten Ausführungsbeispiel im Luftführungsgehäuse 1 ein weiteres Einlegeteil F mit hierin integrierten Klappen 6 vorgesehen, wobei wiederum die einzelnen Klappen 6 im Falle einer vierzonigen Klimaanlage getrennt und im Falle einer dreizonigen Klimaanlage gekoppelt sein können. Das Einlegeteil F bildet eine Luftverteilungsvorrichtung zu den Fußräumen und ist vorliegend aus fertigungstechnischen Gründen getrennt vom Einlegeteil E ausgebildet.

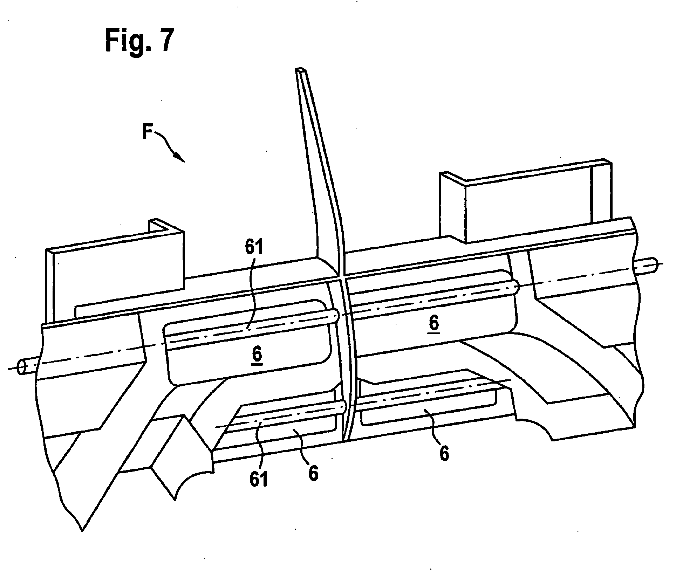

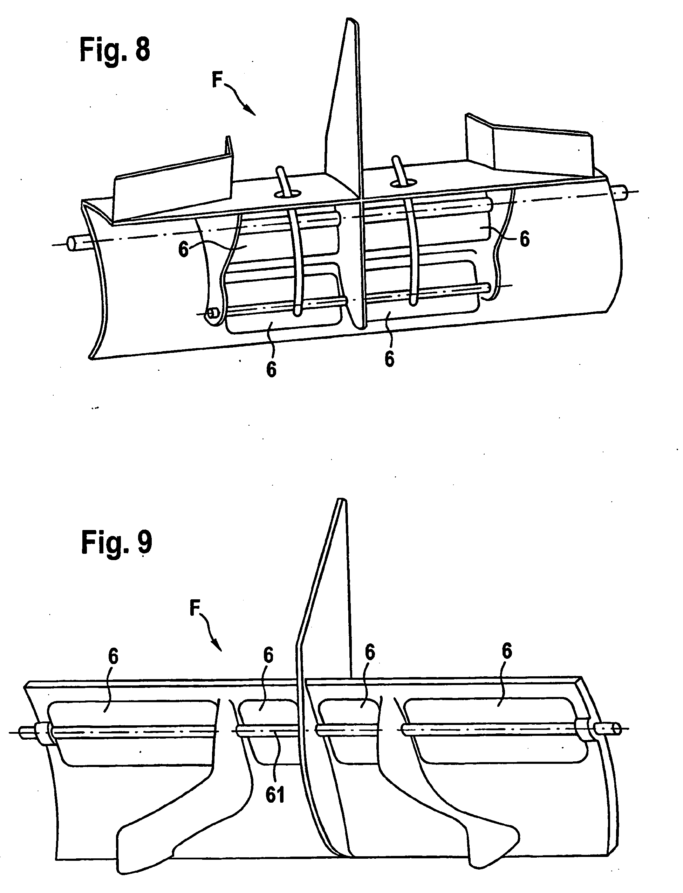

Das in den Figuren 7 und 8 dargestellte Einlegeteil F weist vier Klappen 6 auf, die in zwei Reihen zu je zwei Klappen 6 angeordnet sind. Die Klappen 6 jeder Reihe schwenken um die gleiche Schwenkachse 61. Die Steuerung kann - je nach Verwendungszweck - unabhängig voneinander, teilweise gekoppelt oder miteinander gekoppelt erfolgen. Die Betätigung erfolgt auf an sich bekannte Weise.

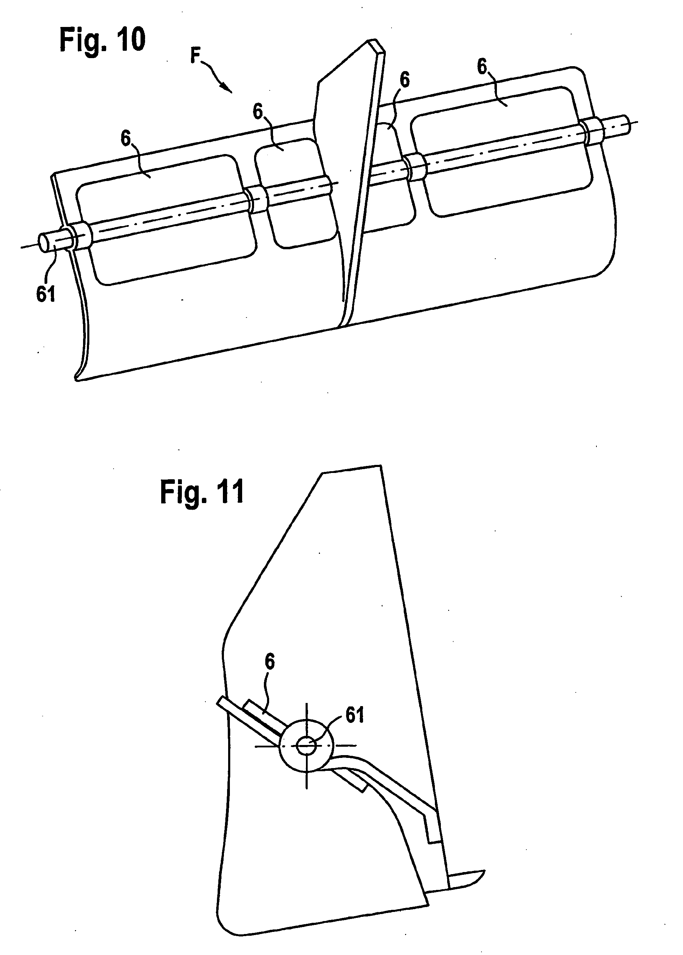

In den Figuren 9 bis 11 ist eine Variante des Einlegeteils F mit vier nebeneinander angeordneten Klappen 6 dargestellt, wobei alle Klappen 6 um die gleiche Schwenkachse 61 schwenkbar sind. Die Steuerung kann, wie unter Bezugnahme auf die Figuren 7 und 8 beschrieben, erfolgen. Zur unabhängigen Steuerung der Klappen 6 kann eine Klappe 6 eine Hohlwelle aufweisen, durch welche die Welle einer anderen Klappe 6 geführt ist.

Gemäß einer weiteren Variante ist im Einlegeteil lediglich eine durchgehende Klappe für alle Fußräume vorgesehen, so dass keine zonenabhängige Steuerung der Fußraum-Temperierung und -Belüftung erfolgt.

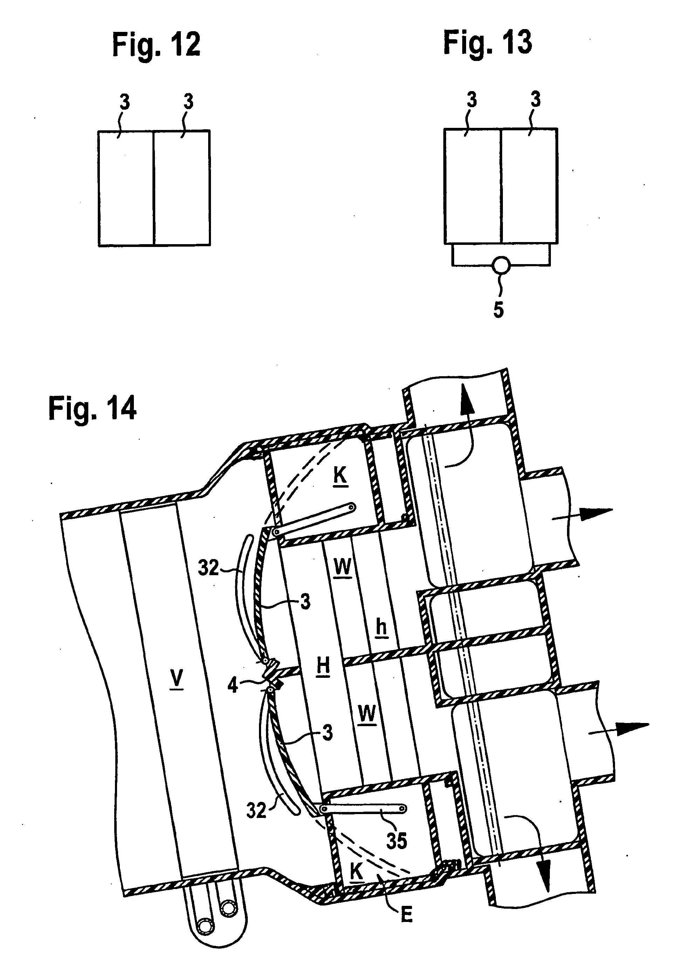

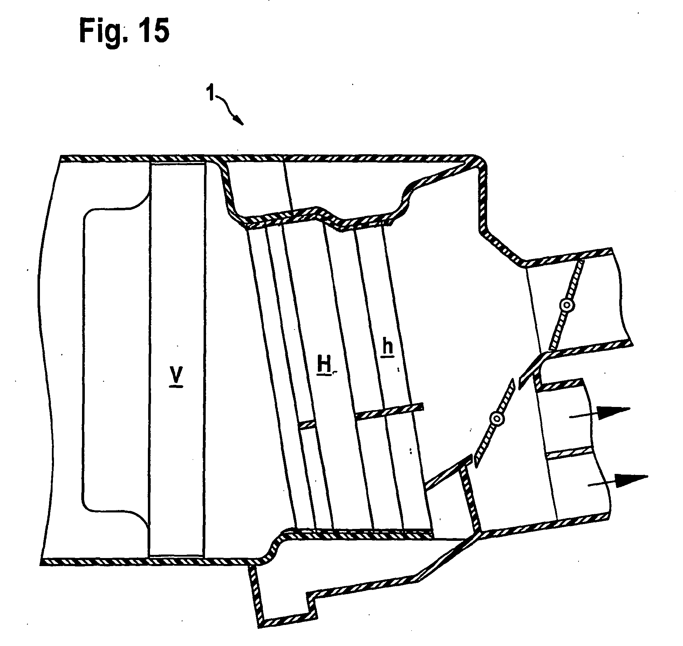

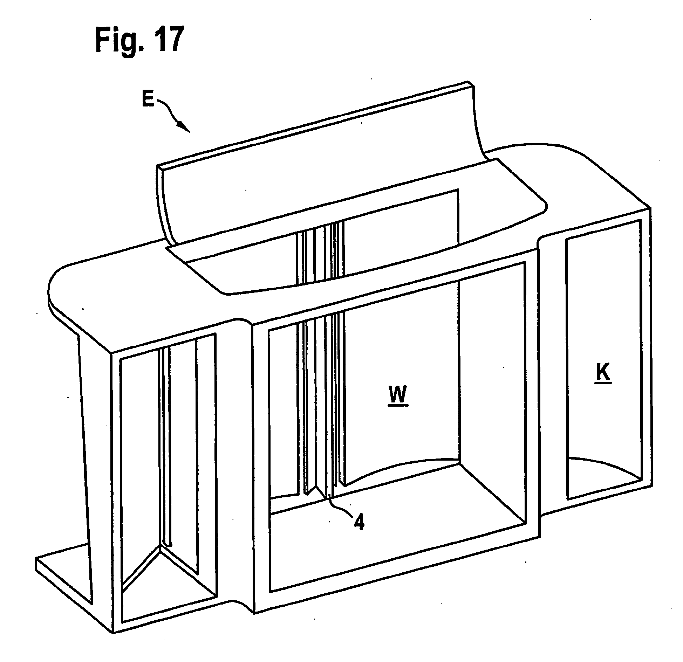

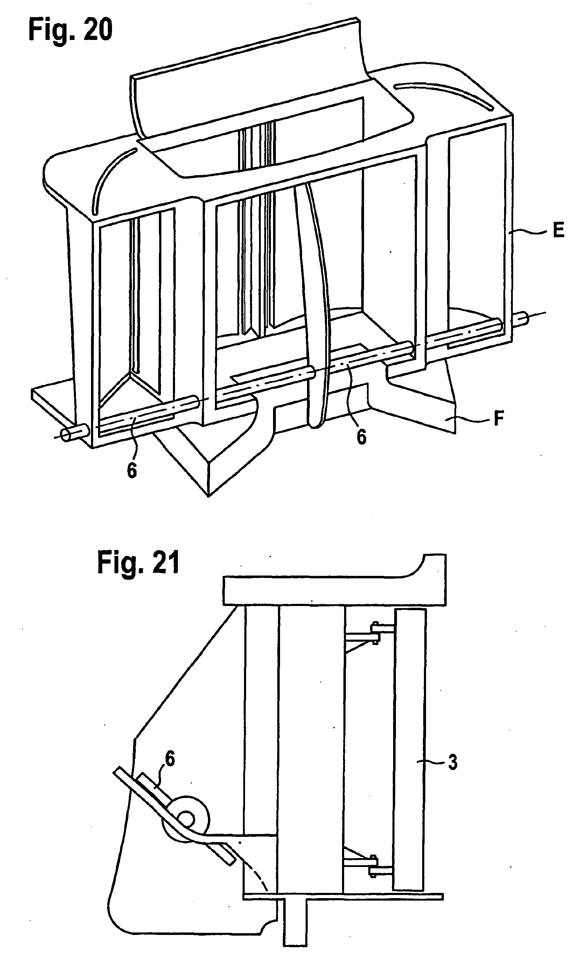

Das zweite, in den Figuren 12 bis 21 dargestellte Ausführungsbeispiel mit Varianten entspricht vom Prinzip her dem ersten Ausführungsbeispiel mit Variante, jedoch ist als Basisvariante eine zweizonige Kraftfahrzeug-Klimaanlage vorgesehen, welche zwei durch eine Trennwand 4 voneinander getrennte Warmluftkanäle W und zwei seitlich hiervon angeordnete Kaltluftkanäle K aufweist. Bei der Basisvariante ist jeder der beiden Klimazonen zur Regelung der Lufttemperatur je eine Klappe 3 zugeordnet, die direkt über eine außerhalb des Luftführungsgehäuses 1 angeordnete Steuerungsvorrichtung ansteuerbar ist und die unabhängig von der anderen Klappe 3 bewegt werden kann.

Im Falle der einzonigen Variante erfolgt, vergleichbar mit der Variante des ersten Ausführungsbeispiels, außerhalb des Luftführungsgehäuses 1 eine Koppelung der beiden Klappen 3 mittels einer mechanischen Klappenkoppelung 5, so dass nur eine Steuervorrichtung erforderlich ist.

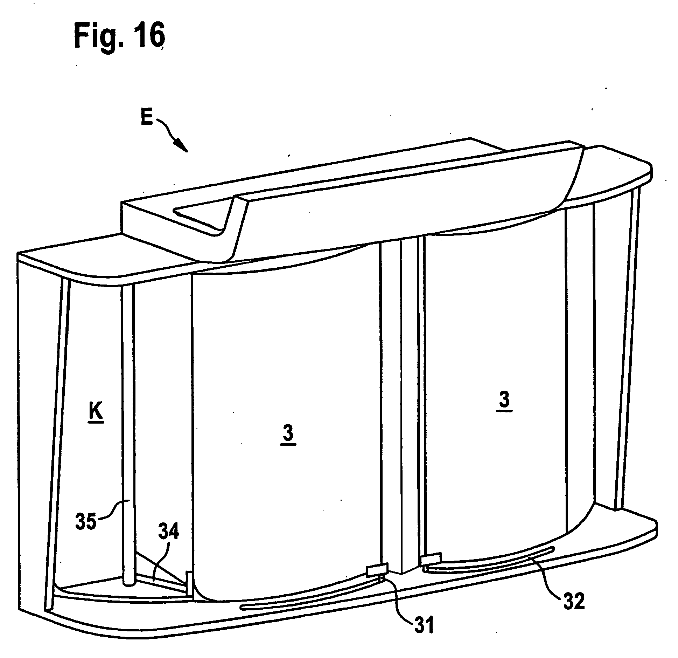

Gemäß den in den Figuren 16 bis 18 dargestellten Variante ist, wie beim ersten Ausführungsbeispiel, ein zweites Einlegeteil vorgesehen, welches für die Luftverteilervorrichtung für die Fußräume der einzelnen Zonen bildet. Hierbei kann im Falle einer zweizonigen Klimaanlage ein Einlegeteil mit zwei Klappen und im Falle einer einzonigen Klimaanlage ein anderes Einlegeteil mit einer großen Klappe verwendet werden, jedoch ist auch ein Koppeln der beiden Klappen des Zweizonen-Einlegeteils möglich. Prinzipiell kann auch im Falle einer zweizonigen Klimaanlage eine einzonige Ausgestaltung der Fußraumbelüftung vorgesehen sein, so dass in diesem Fall eine durchgehende Klappe verwendet werden kann.

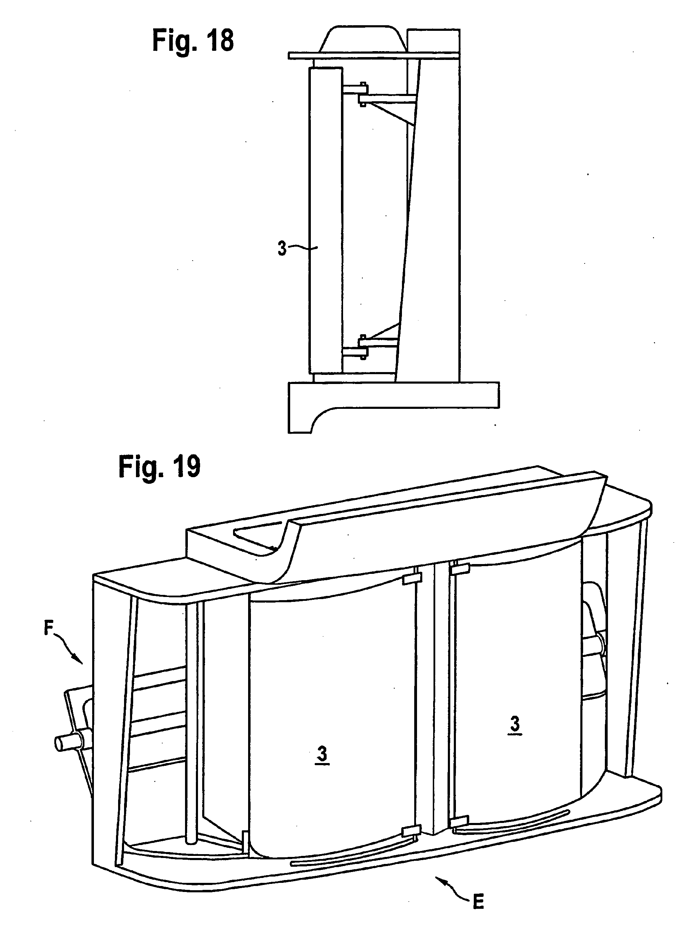

Gemäß der in den Figuren 19 bis 21 dargestellten Variante ist das Einlegeteil F angespritzt an und somit einstückig mit dem Einlegeteil E ausgebildet, wodurch sich die Montage etwas vereinfacht. Das Einlegeteil F weist zwei unabhängig voneinander steuerbare Klappen 6 auf, welche im Falle einer einzonigen Klimaanlage miteinander gekoppelt werden.

Ein Anspritzen des Einlegeteils F im Falle der drei- oder vierzonigen Ausgestaltung ist aus fertigungstechnischen Gründen nur bedingt möglich, so dass in diesem Fall die mehrteilige Ausgestaltung bevorzugt wird.

## Patentansprüche

1. Klimaanlage, insbesondere Kraftfahrzeug-Klimaanlage, mit einem Luftführungsgehäuse (1) und in demselben angeordneten Komponenten, wie mindestens einem Heizer (H; h) und mit einem in dem Luftführungsgehäuse (1) angeordneten Einlegeteil (E; F) zur Luftführung und/oder -mischung, wobei das Einlegeteil (E; F) und/oder das Luftführungsgehäuse miteinander direkt oder indirekt verbindbare, durch Klappen (3; 6) gebildete und gemeinsam regelbare Elemente aufweist, um eine mehrzonige Klimaanlage in eine wenigerzonige Klimaanlage umzuwandeln, **dadurch gekennzeichnet, dass** die Koppelung der Klappen (3; 6) mechanisch erfolgt und im Wesentlichen außerhalb des Luftführungsgehäuses (1) vorgesehen ist.

2. Klimaanlage nach Anspruch 1, **dadurch gekennzeichnet, dass** mindestens zwei Klappen (3; 6) einer wenigerzonigen Klimaanlage miteinander dauerhaft gekoppelt sind, die in der mehrzonigen Variante unabhängig voneinander steuerbar sind,

3. Klimaanlage nach Anspruch 1 oder 2, **dadurch gekennzeichnet, dass** die Klappen (3; 6) am Einlegeteil (E; F) angebracht sind.

4. Klimaanlage nach einem der Ansprüche 1 bis 3, **dadurch gekennzeichnet, dass** die Koppelung der Klappen (3; 6) im Wesentlichen außerhalb des Einlegeteils (E) vorgesehen ist,

5. Klimaanlagen nach einem der vorhergehenden Ansprüche, **dadurch gekennzeichnet, dass** das Luftführungsgehäuse (1) für Klimaanlagen mit unterschiedlicher Zonenanzahl zumindest im Einbaubereich des Einlegeteils (E; F) gleich ausgebildet sind.

6. Klimaanlage nach einem der vorhergehenden Ansprüche, **dadurch gekennzeichnet, dass** im Luftführungsgehäuse (1) mindestens ein Einlegeteil (E; F) angeordnet ist, welches in einem Bereich desselben mindestens eine Trennwand (4) aufweist, welche zwei Kanäle (W), die unterschiedlichen Klimazonen zugeordnet sind, voneinander trennt

7. Klimaanlage nach einem der vorhergehenden Ansprüche, **dadurch gekennzeichnet, dass** ein Heizer (H) und/oder Zuheizer (h) in einem Einlegeteil (E) angeordnet ist, das im Luftführungsgehäuse (1) angeordnet ist.

8. Klimaanlage nach einem der vorhergehenden Ansprüche, **dadurch gekennzeichnet, dass** das Einlegeteil. (E) für eine ein- und zweizonige und/oder eine drei- und vierzonige Klimaanlage gleich ausgebildet ist.

9. Klimaanlage nach einem der vorhergehenden Ansprüche, **dadurch gekennzeichnet, dass** das Luftführungsgehäuse (1) für eine ein- und zweizonige und/oder eine drei- und vierzonige Klimaanlage gleich ausgebildet ist.

10. Klimaanlage nach einem der vorhergehenden Ansprüche, **dadurch gekennzeichnet, dass** das Einlegeteil (E) eine Luftverteilervorrichtung zur Luftverteilung zu den Fußräumen umfasst.

11. Klimaanlage nach einem der vorhergehenden Ansprüche, **dadurch gekennzeichnet, dass** ein Einlegeteil (F) für die Luftverteilung zu den Fußräumen getrennt von einem Einlegeteil (E) für die Lufttemperierung ausgebildet ist.

12. Klimaanlage nach einem der vorhergehenden Ansprüche, **dadurch gekennzeichnet, dass** das Einlegeteil (E) einen spiegelbildlichen Aufbau hat, wobei zumindest bereichsweise mittig Warmluftkanäle (W) und seitlich Kaltluftkanäle (K) ausgebildet sind.

13. Klimaanlage nach einem der vorhergehenden Ansprüche, **dadurch gekennzeichnet, dass** die Klimaanlage zumindest einen Verdampfer, einen Filter oder ein Gebläse umfasst.

## Claims

1. Air-conditioning system, in particular an air-conditioning system for motor vehicles, with an air-guide housing (1) having components arranged therein, such as at least one heater (H; h) and with an insert (E; F), for guiding and/or mixing the air arranged in the air-guide housing (1), such that the insert (E; F) and/or the air-guide housing comprise(s) elements, in the form of flaps (3; 6) which can be connected to one another directly or indirectly and can be regulated together in order to convert a multi-zone air-conditioning system into an air-conditioning system having fewer zones, **characterised in that** the said flaps (3; 6) are coupled mechanically and the coupling system is provided essentially outside the air-guide housing (1).

2. Air-conditioning system according to Claim 1, **characterised in that** at least two flaps (3; 6) of an air-conditioning system having fewer zones are coupled permanently to one another and, in the multi-zone variant, can be controlled independently of one another.

3. Air-conditioning system according to Claims 1 or 2, **characterised in that** the flaps (3; 6) are fitted on the insert (E; F).

4. Air-conditioning system according to any of Claims 1 to 3, **characterised in that** the coupling of the flaps (3; 6) is provided essentially outside the insert (E).

5. Air-conditioning system according to any of the preceding claims, **characterised in that** air-guide housings (1) for air-conditioning systems with a different number of zones are of identical design at least in the region in which the insert (E; F) is fitted.

6. Air-conditioning system according to any of the preceding claims, **characterised in that** at least one insert (E; F) is arranged in the air-guide housing (1) which, in one region of thereof, has at least one partition wall (4) that separates from one other two ducts (W), which are assigned to different air-conditioning zones.

7. Air-conditioning system according to any of the preceding claims, **characterised in that** a heater (H) and/or an additional heater (h) is/are arranged in an insert (E) which is arranged in the air-guide housing (1).

8. Air-conditioning system according to any of the preceding claims, **characterised in that** the insert (E) is of identical design for a single- and two-zone and/or a three- and four-zone air-conditioning system.

9. Air-conditioning system according to any of the preceding claims, **characterised in that** the air-guide housing (1) is of identical design for a single- and two-zone and/or a three- and four-zone air-conditioning system.

10. Air-conditioning system according to any of the preceding claims, **characterised in that** the insert (E) comprises an air-distribution device for distributing the air to the foot-wells.

11. Air-conditioning system according to any of claims 1 to 12, **characterised in that** an insert (F) for distributing the air to the foot-wells is formed separately from an insert (E) for controlling the air temperature.

12. Air-conditioning system according to any of the preceding claims, **characterised in that** the insert (E) has a mirror-image configuration, with hot air ducts (W) formed centrally and cold air ducts (K) formed at the sides, at least in some areas.

13. Air-conditioning system according to any of the preceding claims, **characterised in that** the air-conditioning system comprises at least an evaporator, a filter or a fan.

## Revendications

1. Système de climatisation, en particulier système de climatisation pour un véhicule automobile, comprenant un carter de guidage d'air (1) et des composants disposés dans celui-ci, comme au moins un radiateur (H ; h) et une pièce d'insertion (E ; F) disposée dans le carter de guidage d'air (1) et servant au guidage et / ou au mélange d'air, où la pièce d'insertion (E ; F) et / ou le carter de guidage d'air présente des éléments pouvant être combinés entre eux directement ou indirectement, formés par des volets (3 ; 6), et réglables ensemble, pour transformer un système de climatisation à plusieurs zones, en un système de climatisation à zones moins nombreuses,
**caractérisé en ce que** le couplage des volets (3 ; 6) est réalisé mécaniquement et est prévu essentiellement à l'extérieur du carter de guidage d'air (1).

2. Système de climatisation selon la revendication 1, **caractérisé en ce qu'**au moins deux volets (3 ; 6) d'un système de climatisation à zones moins nombreuses sont couplés entre eux de façon permanente, lesquels volets, dans la variante à plusieurs zones, sont réglables indépendamment les uns des autres.

3. Système de climatisation selon la revendication 1 ou 2, **caractérisé en ce que** les volets (3 ; 6) sont fixés sur la pièce d'insertion (E ; F).

4. Système de climatisation selon l'une quelconque des revendications 1 à 3, **caractérisé en ce que** le couplage des volets (3 ; 6) est prévu essentiellement à l'extérieur de la pièce d'insertion (E).

5. Système de climatisation selon l'une quelconque des revendications précédentes, **caractérisé en ce que** le carter de guidage d'air (1), pour des systèmes de climatisation ayant un nombre de zones variable, est configuré de façon identique au moins dans la zone de montage de la pièce d'insertion (E ; F).

6. Système de climatisation selon l'une quelconque des revendications précédentes, **caractérisé en ce qu'**au moins une pièce d'insertion (E ; F) est disposée dans le carter de guidage d'air (1), pièce d'insertion qui, dans une zone de ce même carter de guidage d'air, présente au moins une paroi de séparation (4) qui sépare l'un de l'autre deux conduits (W) qui sont associés à différentes zones de climatisation.

7. Système de climatisation selon l'une quelconque des revendications précédentes, **caractérisé en ce qu'**un radiateur (H) et / ou un radiateur supplémentaire (h) est disposé dans une pièce d'insertion (E) qui est disposée dans le carter de guidage d'air (1).

8. Système de climatisation selon l'une quelconque des revendications précédentes, **caractérisé en ce que** la pièce d'insertion (E) est configurée de façon identique pour un système de climatisation à une seule zone et à deux zones et / ou à trois et à quatre zones.

9. Système de climatisation selon l'une quelconque des revendications précédentes, **caractérisé en ce que** le carter de guidage d'air (1) est configuré de façon identique pour un système de climatisation à une seule zone et à deux zones et / ou à trois et à quatre zones.

10. Système de climatisation selon l'une quelconque des revendications précédentes, **caractérisé en ce que** la pièce d'insertion (E) comprend un dispositif répartiteur d'air servant à la répartition de l'air vers les espaces pour les pieds.

11. Système de climatisation selon l'une quelconque des revendications précédentes, **caractérisé en ce qu'**une pièce d'insertion (F) prévue pour la répartition de l'air vers les espaces pour les pieds est configurée en étant séparée d'une pièce d'insertion (E) prévue pour tempérer l'air.

12. Système de climatisation selon l'une quelconque des revendications précédentes, **caractérisé en ce que** la pièce d'insertion (E) a une structure symétrique où, au moins par zones, des conduits d'air chauds (W) sont configurés au milieu, des conduits d'air froid (K) étant configurés latéralement.

13. Système de climatisation selon l'une quelconque des revendications précédentes, **caractérisé en ce que** le système de climatisation comprend au moins un évaporateur, un filtre ou un ventilateur.
